# EUROPEAN PATENT APPLICATION

(11) **EP 4 640 932 A1**
(43) Date of publication of application: **29.10.2025**
(21) Application number: 23906532.9
(22) Date of filing: 14.11.2023
(51) Int. Cl.: D02G 3/48, D03D 1/00, D03D 19/00, B60C 9/00, B60C 9/22, D03D 9/00, D03D 15/217, D03D 15/283, D03D 15/41

(54) **TIRE BODY PLY AND PNEUMATIC TIRE**

(30) Priority: 20.12.2022 JP 2022203012
(71) Applicant: The Yokohama Rubber Co., Ltd., Hiratsuka-shi, Kanagawa 254-8601 (JP)
(72) Inventor: ISHII Hidekazu, Hiratsuka-shi, Kanagawa 254-8601 (JP)
(74) Representative: Dilg, Haeusler, Schindelmann Patentanwaltsgesellschaft mbH
(86) International application number: PCT/JP2023/040897
(87) International publication number: WO 2024/135161

(57) **Abstract**

Provided are a cord fabric for a tire and a pneumatic tire that provides improved processability during rolling and slitting of a cord fabric and improved tire uniformity. **In** a cord fabric for a tire (1) including a plurality of warps (2) arranged in parallel and a weft (3) threaded to intersect¥ the warps (2) at a coarse density, the warps (2) are organic fiber cords including polyethylene terephthalate fibers or aramid fibers, the weft (3) is a cotton spun yarn, the weft (3) has a fineness in a range of 150 dtex to 350 dtex, and the weft (3) has a density in the range of 2.0 wefts/50 mm to 4.0 wefts/50 mm. The pneumatic tire includes a belt cover layer (18) including a strip material (10) of a cord fabric (1) coated with rubber and spirally wound in a tire circumferential direction.

## Description

### Technical Field

The present invention relates to a cord fabric for a tire and a pneumatic tire using a strip material of the cord fabric for a belt cover layer, and more particularly, to a cord fabric for a tire capable of enabling improvement of processability during rolling and slitting of the cord fabric, and a pneumatic tire capable of enabling improvement of tire uniformity by using the cord fabric for a tire.

### Background Art

Some pneumatic tires include a carcass layer mounted between a pair of bead portions, a belt layer disposed on an outer circumferential side of the carcass layer, and a belt cover layer disposed on an outer circumferential side of the belt layer. The belt cover layer is formed by spirally winding a strip material of a rubber-coated cord fabric in a tire circumferential direction. By providing such a belt cover layer, it is possible to prevent rising of the belt layer during rolling of the tire, thereby improving the high-speed durability of the pneumatic tire and suppressing road noise.

In the related art, in the cord fabric for a tire, which is a starting material for the strip material of the belt cover layer, a highly rigid organic fiber cord is used for a warp (for example, refer to Patent Document 1). Such a cord fabric for a tire is processed into a strip material of a belt cover layer through a rolling step of covering the cord fabric with rubber and a slitting step of cutting the cord fabric along the warp.

However, when a high-elongation yarn (for example, an undrawn yarn of polyethylene terephthalate fiber or a yarn having a core-sheath structure in which polyethylene terephthalate fiber is used as a core and cotton as a sheath) is used for a weft of a cord fabric for a tire, processability during rolling and slitting of the cord fabric is poor. This has disadvantages such as unstable width of the cord fabric or the strip material, occurrence of variations of the number of warps included in the strip material varies, and the like. As a result, there is a problem in that uniformity of a pneumatic tire having a belt cover layer formed using such a slit material degrades.

### Citation List

### Patent Literature

Patent Document 1: JP 5029795 B

### Summary of Invention

### Technical Problem

An object of the present invention is to provide a cord fabric for a tire capable of enabling improvement of processability during rolling and slitting of the cord fabric, and a pneumatic tire capable of enabling improvement of tire uniformity by using the cord fabric for a tire.

### Solution to Problem

A cord fabric for a tire of the present invention to achieve the object described above is a cord fabric for a tire including a plurality of warps arranged in parallel and a weft threaded to intersect the warps at a coarse density. The warps are organic fiber cords including polyethylene terephthalate fibers or aramid fibers. The weft is a cotton spun yarn. The weft has a fineness in a range of 150 dtex to 350 dtex. The weft has a density in a range of 2.0 wefts/50 mm to 4.0 wefts/50 mm.

A pneumatic tire of the present invention to achieve the object described above is a pneumatic tire including a carcass layer mounted between a pair of bead portions, a belt layer disposed on an outer circumferential side of the carcass layer, and a belt cover layer disposed on an outer circumferential side of the belt layer and including a strip material of a cord fabric coated with rubber and spirally wound in a tire circumferential direction. The cord fabric includes a plurality of warps arranged in parallel and a weft threaded to intersect the warps at a coarse density. The warps are organic fiber cords including polyethylene terephthalate fibers or aramid fibers. The weft is a cotton spun yarn. The weft has a fineness in a range of 150 dtex to 350 dtex. The weft has a density in a range of 2.0 wefts/50 mm to 4.0 wefts/50 mm.

### Advantageous Effects of Invention

In an embodiment of the present invention, the cord fabric includes a plurality of warps arranged in parallel and a weft threaded to intersect the warps at a coarse density, the warps are organic fiber cords including polyethylene terephthalate fibers or aramid fibers, the weft is a cotton spun yarn, the weft has a fineness in the range of 150 dtex to 350 dtex, and the weft has a density in the range of 2.0 wefts/50 mm to 4.0 wefts/50 mm. This can improve the processability during rolling and slitting of the cord fabric. This can stabilize widths of the cord fabric and the strip material and reduce occurrence of variations in the number of warps included in the strip material. As a result, the uniformity of the pneumatic tire having the belt cover layer formed using the strip material can be improved.

In an embodiment of the present invention, the warps and the weft are preferably subjected to a dip treatment using an adhesive composition including an epoxy compound. The adhesive composition including an epoxy compound is effective as an adhesive treatment agent for warp as described above. However, when a dip treatment is performed using the adhesive composition including an epoxy compound, the temperature becomes high, and therefore when the weft is an undrawn yarn of polyethylene terephthalate fiber or a yarn having a core-sheath structure in which polyethylene terephthalate fiber is used as a core and cotton is used as a sheath, the weft becomes susceptible to effects of heat. In contrast, when the cotton spun yarn is used as the weft, the weft becomes less susceptible to the effects of heat even when the dip treatment is performed using the adhesive composition including the epoxy compound.

In an embodiment of the present invention, the weft preferably has an elongation at break of 10% or less. Accordingly, the processability during rolling and slitting of the cord fabric can be improved.

In an embodiment of the present invention, the warps each preferably have a two twisted structure or a three twisted structure. Good effects are achieved when the warp has a two twisted structure or a three twisted structure.

### Brief Description of Drawings

FIG. 1 is a plan view schematically illustrating a cord fabric for a tire according to an embodiment of the present invention.
FIGS. 2(a) and 2(b) are cross-sectional views illustrating warps constituting a cord fabric for a tire, respectively.
FIG. 3 is a plan view illustrating a strip material cut from a rubber-coated cord fabric for a tire.
FIG. 4 is a meridian cross-sectional view illustrating a pneumatic tire according to an embodiment of the present invention.
FIG. 5 is a developed view in which a belt layer and a belt cover layer of the pneumatic tire illustrated in FIG. 4 are extracted and illustrated.

### Description of Embodiments

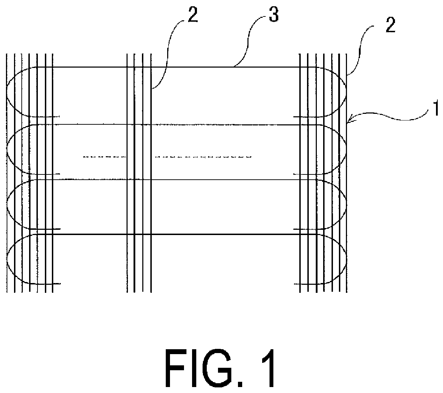

Configurations of embodiments of the present invention will be described in detail below with reference to the accompanying drawings. FIG. 1 schematically illustrates a cord fabric for a tire according to an embodiment of the present invention.

As illustrated in FIG. 1, a cord fabric 1 of the present embodiment includes a plurality of warps 2 arranged in parallel and a weft 3 threaded to intersect the warps 2 at a coarse density. The weft 3 is folded back at both end portions in a width direction of the cord fabric 1.

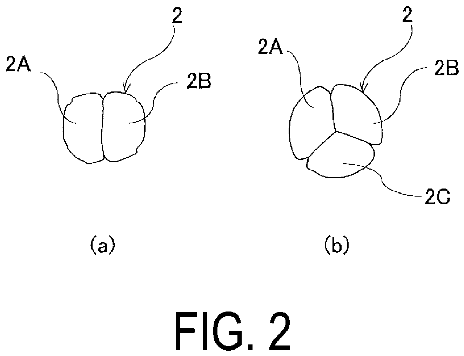

In the cord fabric 1, the warps 2 are organic fiber cords including polyethylene terephthalate fibers or aramid fibers. More specifically, as the organic fiber cord, for example, a cord obtained by intertwining a plurality of plies made of polyethylene terephthalate fiber, a hybrid cord obtained by intertwining at least one ply made of aramid fiber and at least one ply made of nylon fiber, a hybrid cord obtained by intertwining at least one ply made of aramid fiber and at least one ply made of polyethylene terephthalate fiber, or the like can be used. Since such an organic fiber cord has high rigidity, it is effective in improving high-speed durability of the pneumatic tire and suppressing road noise. In particular, the warp 2 preferably has a two twisted structure in which two plies 2A and 2B are twisted as illustrated in FIG. 2(a), or a three twisted structure in which three plies 2A, 2B, and 2C are twisted as illustrated in FIG. 2(b).

In addition, an intermediate elongation of the organic fiber cord constituting the warp 2 at a load of 2.0 cN/dtex is preferably 5.0% or less. If the intermediate elongation is more than 5.0%, the effect of improving road noise is reduced. Note that the "intermediate elongation at a load of 2.0 cN/dtex" is an elongation ratio (%) of a sample cord measured by conducting a tensile test in accordance with JIS L1017 "Test methods for chemical fiber tire cords" with a length of specimen between grips being 250 mm and a tensile speed being 300 ± 20 mm/minute.

In addition, a total fineness of organic fiber cords constituting the warps 2 is preferably in a range of 1800 dtex to 5000 dtex. If the total fineness is less than the 1800 dtex, the strength is low, resulting in a decrease in durability. On the other hand, if the total fineness exceeds the 5000 dtex, the reinforcing layer in the pneumatic tire becomes thicker than necessary, which is not preferable.

In the cord fabric 1, the weft 3 is a cotton spun yarn. A fineness of the weft 3 is in a range of 150 dtex to 350 dtex, and a density of the weft 3 is in a range of 2.0 wefts/50 mm to 4.0 wefts/50 mm. Such a weft 3 exhibits an appropriate cutting strength and an appropriate restricting force. Note that the density of the weft 3 is a cord density of the weft 3 disposed along a longitudinal direction of the warp 2, and is a cord density per length 50 mm of the warp 2.

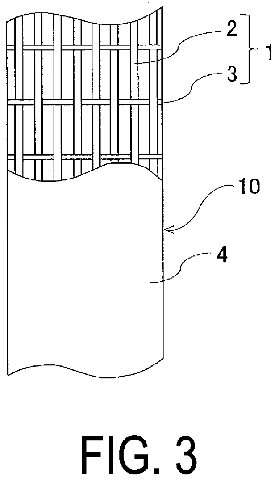

The cord fabric 1 is processed into a strip material 10 as illustrated in FIG. 3 through a rolling step of covering the cord fabric 1 with rubber from both surface sides thereof when passing between a pair of rolls and a slitting step of cutting the cord fabric 1 along the warps 2. In FIG. 3, the strip material 10 is composed of a plurality of warps 2 arranged in parallel along a longitudinal direction thereof, a weft 3 intersecting the warps 2, and a coating rubber 4 covering the warps 2 and the weft 3.

The cord fabric 1 described above includes the plurality of warps 2 arranged in parallel and the weft 3 threaded to intersect the warps 2 at a coarse density, the warps 2 are organic fiber cords including polyethylene terephthalate fibers or aramid fibers, the weft 3 is a cotton spun yarn, the weft 3 has a fineness in the range of 150 dtex to 350 dtex, and the weft 3 has a density in the range of 2.0 wefts/50 mm to 4.0 wefts/50 mm. This can improve the processability during rolling and slitting of the cord fabric 1. This makes it possible to stabilize widths of the cord fabric 1 and the strip material 10 and to suppress variations in the number of warps 2 included in the strip material 10.

Here, when the weft 3 is a high-elongation yarn, the weft 3 is easily elongated, and thus the width of the cord fabric 1 is likely to fluctuate during rolling. If the fineness of the weft 3 is smaller than 150 dtex, it is difficult to dispose the warps 2 at equal intervals because the weft 3 is easily broken, whereas if the fineness of the weft 3 is larger than 350 dtex, it is difficult to cut the weft 3 because the strength is too high. In addition, if the density of the weft 3 is less than 2.0 wefts/50 mm, the restricting force in the width direction of the cord fabric 1 becomes small, so that the cord fabric 1 tends to be excessively widened during rolling. On the other hand, if the density of the weft 3 is more than 4.0 wefts/50 mm, the restricting force in the width direction of the cord fabric 1 becomes large, so that the cord fabric 1 tends to be excessively narrowed during rolling.

An elongation at break of the weft 3 is preferably 10% or less. Accordingly, the processability during rolling and slitting of the cord fabric 1 can be improved. Here, the weft 3 having the elongation at break greater than 10% causes the width of the cord fabric 1 to easily fluctuate during rolling.

The cord fabric 1 described above is generally subjected to a dip treatment using an adhesive composition prior to rubber coating. First, the cord fabric 1 is immersed in a treatment liquid of an adhesive composition including an epoxy compound to apply the adhesive composition including the epoxy compound to the warps 2 and the weft 3. The cord fabric 1 to which the adhesive composition including the epoxy compound is applied is subjected to a drying treatment in a dry zone in a temperature range of 100°C to 150°C, for example, and then subjected to a heat treatment in a temperature range of 235°C to 250°C in a heat-set zone while applying a tensile force of 0.15 g/dtex to 0.60 g/dtex to the warps 2, for example.

Then, the cord fabric 1 is immersed in a treatment liquid of an adhesive composition made of resorcin-formalin-latex (RFL) to apply the RFL adhesive composition to the warps 2 and the weft 3. The cord fabric 1 to which the RFL adhesive composition is applied is subjected to a drying treatment in a dry zone in a temperature range of 100°C to 150°C, for example, and then subjected to a heat treatment in a temperature range of 225°C to 255°C in a normalizing zone while applying a tensile force of 0.15 g/dtex to 0.35 g/dtex to the warps 2, for example. In addition, instead of the RFL adhesive composition, an adhesive composition from which resorcin and formalin have been removed can also be used.

The cord fabric 1 in which a cotton spun yarn is used as the weft 3 is particularly effective when the dip treatment using the adhesive composition including the epoxy compound is performed. That is, the adhesive composition including the epoxy compound is effective as an adhesive treatment agent for the warp 2. However, when the dip treatment is performed using the adhesive composition including the epoxy compound, the temperature becomes high, and therefore when the weft 3 is an undrawn yarn of polyethylene terephthalate fiber or a yarn having a core-sheath structure in which polyethylene terephthalate fiber is used as a core and cotton is used as a sheath, the weft becomes susceptible to effects of heat. In contrast, when the cotton spun yarn is used as the weft 3, the weft becomes less susceptible to the effects of heat even when the dip treatment is performed using the adhesive composition including the epoxy compound.

The cord fabric for a tire of the present invention can be used for a reinforcing layer of a pneumatic tire represented by a carcass layer, a belt cover layer, and a side reinforcing layer. In particular, the cord fabric is preferably used for the belt cover layer.

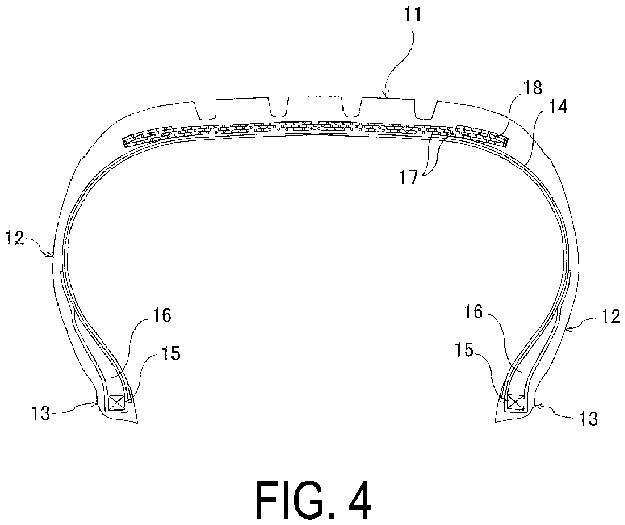

FIG. 4 illustrates a pneumatic tire according to an embodiment of the present invention. As illustrated in FIG. 1, a pneumatic tire of the present embodiment includes a tread portion 11 extending in a tire circumferential direction and having an annular shape, a pair of sidewall portions 12 and 12 disposed on both sides of the tread portion 11, and a pair of bead portions 13 and 13 disposed on inner sides of the sidewall portions 12 and 12 in a tire radial direction.

A carcass layer 14 is mounted between the pair of bead portions 13 and 13. The carcass layer 14 includes a plurality of reinforcing cords extending in the tire radial direction and is folded back around a bead core 15 disposed in each of the bead portions 13 from a tire inner side to a tire outer side. A bead filler 16 having a triangular cross-sectional shape and formed of a rubber composition is disposed on an outer circumference of the bead core 15.

On the other hand, a plurality of belt layers 17 are embedded on the outer circumferential side of the carcass layer 14 in the tread portion 11. The belt layers 17 each include a plurality of reinforcing cords that are inclined with respect to the tire circumferential direction, with the reinforcing cords of the different layers arranged in a criss-cross manner. In the belt layers 17, the inclination angle of the reinforcing cords with respect to the tire circumferential direction ranges from, for example, 10° to 40°. Steel cords are preferably used as the reinforcing cords of the belt layers 17. To improve high-speed durability, at least one belt cover layer 18, formed by arranging the reinforcing cords at an angle of, for example, 5° or less with respect to the tire circumferential direction, is disposed on the outer circumferential side of the belt layers 17.

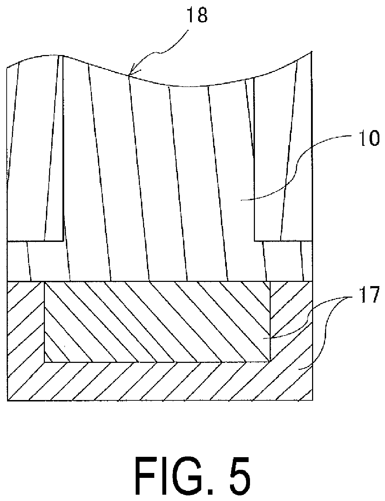

As illustrated in FIG. 5, the belt cover layer 18 is formed by spirally winding the strip material 10 of the rubber-coated cord fabric 1 around the outer circumferential side of the belt layer 17 in the tire circumferential direction. A width of the strip material 10 is, for example, from 5 mm to 20 mm. By providing such a belt cover layer 18, it is possible to prevent rising of the belt layer 17 during rolling of the tire, thereby improving the high-speed durability of the pneumatic tire and suppressing road noise.

When the cord fabric 1 configured as described above is used as a starting material for the belt cover layer 18, the processability of the cord fabric 1 during rolling and slitting is improved. Therefore, the widths of the cord fabric 1 and the strip material 10 can be stabilized, and variations in the number of warps included in the strip material 10 can be suppressed. As a result, the uniformity of the pneumatic tire having the belt cover layer 18 formed using the strip material 10 can be improved.

### Examples

Regarding the cord fabric for a tire including a plurality of warps arranged in parallel and a weft threaded to intersect the warps at a coarse density, cord fabrics for a tire of Conventional Example, Examples 1 to 4, and Comparative Examples 1 to 4 were manufactured in which the material of the warps, the material of the weft, the elongation at break of the weft, the fineness of the weft, and the density of the weft were set as illustrated in Table 1.

The cord fabric for a tire was subjected to a first dip treatment using an adhesive composition including an epoxy compound and a second dip treatment using an adhesive composition made of resorcin-formalin-latex (RFL). For the warp of the cord fabric for a tire, a cord obtained by intertwining a plurality of plies made of polyethylene terephthalate (PET) fiber or a hybrid cord obtained by intertwining a ply made of aramid fiber and a ply made of nylon fiber was used. For the weft of the cord fabric for a tire, a yarn having a core-sheath structure in which polyethylene terephthalate fiber was used as a core and cotton was used as a sheath, or a cotton spun yarn was used.

For the cord fabrics for a tire of the Conventional Example, Examples 1 to 4, and Comparative Examples 1 to 4, the processability during rolling and the processability during slitting were evaluated by the following method, and the results are also shown in Table 1.

### Processability during rolling:

In the rolling step of coating the cord fabric with rubber, the amount of width fluctuation of the rolled material after rubber coating (rubber-coated cord fabric) was measured over the entire length. With respect to the evaluation results, "x" indicates that the amount of width fluctuation of the rolled material exceeded 10 mm, "Δ" indicates that the amount of width fluctuation was 10 mm or less and exceeded 5 mm, and "○" indicates that the amount of width fluctuation was 5 mm or less.

### Processability during slitting:

In the step of slitting the rolled material to a constant width, the amount of width fluctuation of the strip material after slitting was measured over the entire length. With respect to the evaluation results, "x" indicates that the amount of width fluctuation of the strip material exceeded 2 mm, "Δ" indicates that the amount of width fluctuation was 2 mm or less and exceeded 1 mm, and "○" indicates that the amount of width fluctuation was 1 mm or less.

**[Table 1]**

| | Conventional Example | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Dip treatment liquid | Epoxy/RFL | Epoxy/RFL | Epoxy/RFL | Epoxy/RFL | Epoxy/RFL | Epoxy/RFL | Epoxy/RFL | Epoxy/RFL | Epoxy/RFL |
| Material of warp | PET | PET | PET | PET | Aramid/nylon | PET | PET | PET | PET |
| Material of weft | PET/cotton | Cotton | Cotton | Cotton | Cotton | Cotton | Cotton | Cotton | Cotton |
| Elongation at break (%) | 100 | 7 | 7 | 7 | 7 | 7 | 7 | 7 | 7 |
| Fineness of weft (dtex) | 300 | 150 | 300 | 350 | 300 | 140 | 400 | 300 | 300 |
| Density of weft (wefts/50 mm) | 3.0 | 3.0 | 3.0 | 3.0 | 3.0 | 3.0 | 3.0 | 1.5 | 4.5 |
| Processability during rolling: | Δ | ○ | ○ | ○ | ○ | × | ○ | Δ | Δ |
| Processability during slitting: | Δ | ○ | ○ | ○ | ○ | × | Δ | × | × |

As can be seen from Table 1, in the cord fabric for a tire of the Conventional Example, since the weft was a high-elongation yarn, the width during rolling fluctuated and the width during slitting was not stable, whereas in the cord fabrics for a tire of Examples 1 to 4, since the weft was a cotton spun yarn, the width during rolling was stable and the width during slitting was also stable. On the other hand, in the cord fabric for a tire of Comparative Example 1, since the weft was too thin, the weft was likely to break during rolling, and as a result, the warps could not be restricted at equal intervals, and the slitting was also difficult. In the cord fabric for a tire of Comparative Example 2, since the weft was too thick, slitting was difficult due to excessive strength. In the cord fabric for a tire of Comparative Example 3, since the density of the weft was too low, the restricting force in the width direction of the cord fabric was small, the width during rolling was widened, and the width during slitting was also not stable. In the cord fabric for a tire of Comparative Example 4, since the density of the weft was too high, the restricting force in the width direction of the cord fabric was large, the width during rolling was narrowed, and the width during slitting was also not stable.

Next, when manufacturing a pneumatic tire including a carcass layer mounted between a pair of bead portions, a belt layer disposed on the outer circumferential side of the carcass layer, and a belt cover layer disposed on the outer circumferential side of the belt layer, the belt cover layer was formed by spirally winding the strip material obtained from the cord fabric for a tire of the Conventional Example, Examples 1 to 4, and Comparative Examples 1 to 4 in the tire circumferential direction.

For the pneumatic tires of the Conventional Example, Examples 1 to 4, and Comparative Examples 1 to 4, the variation in the number of warps in the strip material and the tire uniformity were evaluated by the following method, and the results are shown in Table 2.

### Variation in number of warps in strip material:

The number of warps in the strip material used for the ten tires was measured, and the number of warps deviating from the reference value was determined. With respect to the evaluation results, for example, when the reference value of the number of warps is eight, the case where the strip material has seven or nine warps is indicated by "±1."

### Tire uniformity:

Each test tire was mounted on a uniformity tester, the conicity of ten test tires was measured, and the standard deviation σ was obtained. Evaluation results are expressed as an index value, using the reciprocal of the standard deviation, with the value of the Conventional Example being defined as 100. Larger index values indicate better tire uniformity.

**[Table 2]**

| | Conventional Example | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Dip treatment liquid | Epoxy/RFL | Epoxy/RFL | Epoxy/RFL | Epoxy/RFL | Epoxy/RFL | Epoxy/RFL | Epoxy/RFL | Epoxy/RFL | Epoxy/RFL |
| Material of warp | PET | PET | PET | PET | Aramid/nylon | PET | PET | PET | PET |
| Material of weft | PET/cotton | Cotton | Cotton | Cotton | Cotton | Cotton | Cotton | Cotton | Cotton |
| Elongation at break (%) | 100 | 7 | 7 | 7 | 7 | 7 | 7 | 7 | 7 |
| Fineness of weft (dtex) | 300 | 150 | 300 | 350 | 300 | 140 | 400 | 300 | 300 |
| Density of weft (wefts/50 mm) | 3.0 | 3.0 | 3.0 | 3.0 | 3.0 | 3.0 | 3.0 | 1.5 | 4.5 |
| Variation in number of warps in strip naterial | ±1 | 0 | 0 | 0 | 0 | - | ±2 | ±3 | ±3 |
| Tire uniformity (index value) | 100 | 105 | 105 | 105 | 105 | - | 98 | 95 | 95 |

As can be seen from Table 2, in the tire of the Conventional Example, since the weft was a high-elongation yarn, the width during rolling fluctuated and the number of warps in the strip material varied. In contrast, in the tires of Examples 1 to 4, since the weft was a cotton spun yarn, the width during rolling was stable, the width during slitting was also stable, the number of warps in the strip material was constant, and as a result, the uniformity was improved. On the other hand, in Comparative Example 1, since the weft was too thin, the weft was likely to break during rolling, and the slitting was also difficult. Therefore, in Comparative Example 1, the strip material could not be used for the manufacture of the tire. In the tire of Comparative Example 2, since the weft was too thick, it was difficult to cut the weft during slitting, wrinkles were generated in the width direction of the rolled material, the number of warps in the strip material varied, and as a result, the uniformity degraded. In the tire of Comparative Example 3, since the density of the weft was too low, the restricting force in the width direction of the cord fabric was small, the width during rolling was widened, the width during slitting was also not stable, and as a result, the uniformity degraded. In the tire of Comparative Example 4, since the density of the weft was too high, the restricting force in the width direction of the cord fabric was large, the width during rolling was narrowed, the width during slitting was also not stable, and as a result, the uniformity degraded.

### Reference Signs List

1: Cord fabric
2: Warp
3: Weft
4: Coating rubber
10: Strip material
11: Tread portion
12: Sidewall portion
13: Bead portion
14: Carcass layer
15: Bead core
16: Bead filler
17: Belt layer
18: Belt cover layer

## Claims

1. A cord fabric for a tire, the cord fabric comprising:
a plurality of warps arranged in parallel; and
a weft threaded to intersect the warps at a coarse density;
the warps being organic fiber cords comprising polyethylene terephthalate fibers or aramid fibers,
the weft being a cotton spun yarn,
the weft having a fineness in a range of 150 dtex to 350 dtex, and
the weft having a density in a range of 2.0 wefts/50 mm to 4.0 wefts/50 mm.

2. The cord fabric for a tire according to claim 1, wherein the warps and the weft are subjected to a dip treatment using an adhesive composition including an epoxy compound.

3. The cord fabric for a tire according to claim 1 or 2, wherein the weft has an elongation at break of 10% or less.

4. The cord fabric for a tire according to any one of claims 1 to 3, wherein the warps have a two twisted structure or a three twisted structure.

5. A pneumatic tire, comprising:
a carcass layer mounted between a pair of bead portions;
a belt layer disposed on an outer circumferential side of the carcass layer; and
a belt cover layer disposed on an outer circumferential side of the belt layer and comprising a strip material of a cord fabric coated with rubber and spirally wound in a tire circumferential direction,
the cord fabric comprising a plurality of warps arranged in parallel and a weft threaded to intersect the warps at a coarse density,
the warps being organic fiber cords comprising polyethylene terephthalate fibers or aramid fibers,
the weft being a cotton spun yarn,
the weft having a fineness in a range of 150 dtex to 350 dtex, and
the weft having a density in a range of 2.0 wefts/50 mm to 4.0 wefts/50 mm.

6. The pneumatic tire according to claim 5, wherein the warps and the weft are subjected to a coating treatment using an adhesive composition including an epoxy compound.

7. The pneumatic tire according to claim 5 or 6, wherein the weft has an elongation at break of 10% or less.

8. The pneumatic tire according to any one of claims 5 to 7, wherein the warps have a two twisted structure or a three twisted structure.
